# EUROPÄISCHE PATENTANMELDUNG

(11) **EP 3 824 777 A1**
(43) Veröffentlichungstag der Anmeldung: **26.05.2021**
(21) Anmeldenummer: 19210544.3
(22) Anmeldetag: 21.11.2019
(51) Int. Cl.: A47J 43/04, A47J 27/00, A47J 36/32, A47J 43/07, A47J 42/44

(54) **VERFAHREN UND VORRICHTUNG FÜR EIN AUTOMATISIERTES WÜRZEN VON SPEISEN**

(71) Anmelder: Vorwerk & Co. Interholding GmbH, 42270 Wuppertal (DE)
(72) Erfinder: Schmitz, Kevin, 40599 Düsseldorf (DE)
(74) Vertreter: Gille Hrabal Partnerschaftsgesellschaft mbB Patentanwälte

(57) **Zusammenfassung**

Die Erfindung betrifft ein Verfahren für eine Zubereitung einer Speise mit einem Speisenzubereitungsapparat (101) und einer elektrisch betreibbaren Gewürzabgabevorrichtung (1), wobei der Speisenzubereitungsapparat (101) einen Speisenzubereitungsraum (102) aufweist und die Gewürzabgabevorrichtung (1) eine Gewürzkammer (6) für die Lagerung eines Gewürzes und eine Dosiereinrichtung (11, 12) umfasst, durch die ein Gewürz dosiert aus der Gewürzkammer (6) entnommen werden kann, mit den Schritten:
• in dem Speisenzubereitungsraum (102) wird eine Speise gesteuert durch eine Steuereinheit gemäß Rezeptschritten eines Rezepts zubereitet,
• das Rezept umfasst einen Gewürzrezeptschritt, gemäß dem ein Gewürz hinzugefügt werden soll,
• wird der Gewürzrezeptschritt erreicht, so wird gesteuert durch die Steuereinheit ein Signal durch eine Signaleinrichtung (4, 110) ausgelöst;
• im Anschluss an das Signal ergreift ein Benutzer die Gewürzabgabevorrichtung (1) und bringt die Gewürzabgabevorrichtung (1) so zum Speisenzubereitungsraum (102), dass ein Gewürz aus der Gewürzabgabevorrichtung (1) in den Speisenzubereitungsraum (102) abgegeben werden kann, oder so zu einem Messgefäß (107), dass das Gewürz aus der Gewürzabgabevorrichtung (1) in das Messgefäß (107) abgegeben werden kann;
• ist die Gewürzabgabevorrichtung (1) durch den Benutzer zum Speisenzubereitungsraum (102) oder zum Messgefäß (107) gebracht worden, so gibt die Gewürzabgabevorrichtung (1) die Menge an Gewürz dosiert ab, die nach dem Gewürzrezeptschritt hinzugefügt werden soll, wobei die Dosierung durch die Dosiereinrichtung (11, 12) automatisiert erfolgt ist.

Die Erfindung betrifft eine Gewürzabgabevorrichtung (1) zur Durchführung des Verfahrens.

Auch ohne Fachwissen gelingt es durch die Erfindung, im Rahmen der Zubereitung einer Speise fehlerfrei zu würzen.

## Beschreibung

Die Erfindung betrifft ein Verfahren für ein Würzen einer Speise und eine Gewürzabgabevorrichtung.

Speisen werden durch die Verarbeitung von Zutaten zubereitet. Für die Zubereitung von Speisen können Speisenzubereitungsapparate wie zum Beispiel die Küchenmaschine Thermomix® eingesetzt werden. Die Küchenmaschine Thermomix® kann Zutaten für eine Speise in einem zugehörigen Speisenzubereitungsgefäß wiegen, erhitzen, mischen und/oder zerkleinern. Die Zubereitung einer Speise kann mit der Küchenmaschine Thermomix® gemäß Rezeptschritten eines Rezepts Schritt für Schritt halbautomatisiert durchgeführt werden.

Da Zutaten, die in das Speisenzubereitungsgefäß gebracht werden, gewogen werden können, können fehlerhafte Dosierungen leicht vermieden werden. Dies gilt aber nicht für Gewürze, da die benötigten Mengen zu gering sind, um mit hinreichender Genauigkeit gewogen werden zu können.

Um Gewürze während einer Zubereitung einer Speise hinzuzufügen, können Gewürzabgabevorrichtungen eingesetzt werden. So gibt es handgeführte Gewürzmühlen, die durch Drehen eines Mahlwerks Gewürze abgeben können.

Das Drehen des Mahlwerks einer Gewürzmühle kann mithilfe eines Elektromotors geschehen. Bei solchen elektrischen Gewürzmühlen kann ein Taster durch den Benutzer betätigt werden. Solange der Taster betätigt wird, dreht sich das Mahlwerk mithilfe des Elektromotors, und es wird das entsprechende Gewürz wie zum Beispiel Pfeffer abgegeben. Die Dosierung des so abgegebenen Gewürzes hängt also davon ab, wie lange der Taster betätigt wird. Die Dosierung erfolgt folglich manuell.

Aus der Druckschrift US 2016/0374486 A1 ist eine Gewürzabgabevorrichtung für einen automatischen Speisenzubereitungsapparat bekannt. Die Gewürzabgabevorrichtung verwendet eine austauschbare Kartusche mit einem Gewürz. In der Kartusche ist ein Abgabemechanismus eingebaut, um ein vorgegebenes Volumen zu isolieren und dieses in Richtung einer Öffnung im Boden der Kartusche zu bewegen.

Aus der Druckschrift EP 3358516 A1 ist eine Vorrichtung mit einem Vorratsbehälter für Gewürze und einem Aromaspeicher bekannt. Mithilfe von Pumpen werden Gewürz und Aroma abgegeben.

Aus den Druckschriften US 2016/0286837 A1 und US 2016/0219906 A1 sind Verfahren für ein automatisiertes Kochen nach Rezepten bekannt.

Aufgabe der Erfindung ist die Schaffung eines Verfahrens für ein Würzen einer Speise, durch welches fehlerhafte Dosierungen vermieden werden können. Es ist weiter Aufgabe der Erfindung, eine handbetätigte Gewürzabgabevorrichtung für die Durchführung des Verfahrens zu schaffen.

Die Aufgabe der Erfindung wird durch ein Verfahren mit den Merkmalen des Patentanspruchs 1 sowie durch eine handbetätigte Gewürzabgabevorrichtung mit den Merkmalen des Nebenanspruchs gelöst. Vorteilhafte Ausgestaltungen ergeben sich aus den abhängigen Ansprüchen.

Patentanspruch 1 betrifft ein Verfahren für die Zubereitung einer Speise mit einem Speisenzubereitungsapparat. In dem Speisenzubereitungsapparat kann eine Speise gesteuert durch eine elektronische Steuereinheit gemäß Rezeptschritten eines Rezepts zubereitet werden. Der Speisenzubereitungsapparat kann beispielsweise eine Küchenmaschine, ein Backofen, eine Mikrowelle, ein Dampfgarer oder ein Herd sein. Eine Speise im Sinne der vorliegenden Erfindung umfasst essbare und trinkbare Speisen, also auch Getränke.

Der Speisenzubereitungsapparat umfasst einen Speisenzubereitungsraum. Der Speisenzubereitungsraum ist ein durch Wände begrenzter Raum, in den Zutaten für die Zubereitung einer Speise gebracht werden können. Die in den Speisenzubereitungsraum gebrachten Zutaten können von dem Speisenzubereitungsapparat verarbeitet werden, also zum Beispiel erhitzt, zerkleinert und/oder vermischt werden. Der Speisenzubereitungsraum kann untrennbar mit dem übrigen Teil des Speisenzubereitungsapparats verbunden sein. Der Speisenzubereitungsraum kann ein Speisenzubereitungsgefäß sein, welches von dem übrigen Teil des Speisenzubereitungsapparats getrennt werden kann. Das Speisenzubereitungsgefäß kann einen Deckel umfassen, mit dem eine Öffnung des Speisenzubereitungsgefäßes verschlossen werden kann. Es kann eine elektrische Arretierungseinrichtung vorgesehen sein, mit der der Deckel mit dem Speisenzubereitungsgefäß fest verbunden werden kann. Arretiert die elektrische Arretierungseinrichtung den Deckel, so kann der Deckel nicht von dem Speisenzubereitungsgefäß gelöst werden. Das Arretieren kann bevorzugt durch die Steuereinheit gesteuert werden, so zum Beispiel automatisiert in Abhängigkeit von einem Rezeptschritt eines Rezeptes. Der Deckel kann eine Öffnung umfassen, die verschlossen werden kann, so beispielsweise durch ein Messgefäß. Durch die Öffnung im Deckel hindurch können dann Zutaten, so zum Beispiel Gewürze, auch dann in das Speisenzubereitungsgefäß eingefüllt werden, wenn der Deckel durch die Arretierungsvorrichtung arretiert ist und daher nicht vom Speisenzubereitungsgefäß gelöst werden kann.

Eine Steuereinheit im Sinne der vorliegenden Erfindung umfasst eine Datenverarbeitungseinrichtung, mit der Daten elektronisch verarbeitet werden können. Eine Steuereinheit im Sinne der vorliegenden Erfindung kann einen elektronischen Speicher umfassen, in dem Daten gespeichert werden können.

Der Speisenzubereitungsapparat kann einen elektronischen Speicher umfassen. In einem solchen elektronischen Speicher können ein oder mehrere Rezepte elektronisch gespeichert sein.

Der Speisenzubereitungsapparat kann ein oder mehrere Schnittstellen umfassen, über die elektronische Daten versendet und/oder empfangen werden können. Es kann sich um ein oder mehrere drahtlose Schnittstellen handeln, um elektronische Daten drahtlos versenden und/oder empfangen zu können. Sind ein oder mehrere Schnittstellen vorhanden, so können ein oder mehrere Rezepte in einem externen elektronischen Speicher gespeichert sein. Ein externer elektronischer Speicher ist ein Speicher, der von dem Speisenzubereitungsapparat räumlich getrennt ist. Der Speisenzubereitungsapparat kann dann so eingerichtet sein, dass dieser ein Rezept vom externen elektronischen Speicher erhalten und dieses für die Zubereitung einer Speise verarbeiten kann.

Ein Benutzer kann den Speisenzubereitungsapparat veranlassen, gemäß dem gespeicherten Rezept eine Speise zuzubereiten. Mithilfe des Speisenzubereitungsapparats wird dann die Speise zubereitet.

Das Rezept kann einen Rezeptschritt umfassen, gemäß dem ein oder mehrere Zutaten in den Speisenzubereitungsraum des Speisenzubereitungsapparats gefüllt werden sollen. Der Speisenzubereitungsapparat kann dann den Benutzer gesteuert durch die Steuereinheit auffordern, die ein oder mehreren Zutaten in den Speisenzubereitungsraum zu bringen. Um den Benutzer auffordern zu können, ein oder mehrere Zutaten in den Speisenzubereitungsraum zu bringen, kann der Speisenzubereitungsapparat einen Bildschirm aufweisen, auf dem Aufforderungen dargestellt werden können.

Der Speisenzubereitungsapparat kann so eingerichtet sein, dass dieser automatisiert erkennt, wenn die nach dem Rezept vorgesehenen ein oder mehreren Zutaten in den Speisenzubereitungsraum gebracht worden sind. Der Speisenzubereitungsapparat kann so eingerichtet sein, dass ein Benutzer vor einer Fortsetzung der Speisenzubereitung bestätigen muss, dass er die ein oder mehrere Zutaten in den Speisenzubereitungsraum eingefüllt hat, die nach dem Rezeptschritt vorgesehen sind. Die Bestätigung kann erfolgen, indem ein Benutzer den Speisenzubereitungsapparat durch Betätigen einer Betätigungseinrichtung veranlasst, einen nächsten Rezeptschritt des Rezeptes durchzuführen. Die Betätigungseinrichtung kann beispielsweise einen Taster umfassen, der für eine Fortsetzung der Speisenzubereitung durch Drücken betätigt werden muss.

Der Speisenzubereitungsapparat kann eine Waage umfassen, mit der das Gewicht von ein oder mehreren Zutaten gewogen werden kann, die in den Speisenzubereitungsraum gefüllt worden sind. Der Speisenzubereitungsapparat kann so eingerichtet sein, dass das Wiegen gesteuert durch den Rezeptschritt automatisiert erfolgt. Sollen also ein oder mehrere Zutaten in den Speisenzubereitungsraum gemäß einem Rezeptschritt hinzugefügt werden, so kann dann die Waage automatisiert aktiviert werden. Sobald eine Zutat in den Speisenzubereitungsraum gefüllt wird, wird das Gewicht gewogen und beispielsweise auf einem Bildschirm des Speisenzubereitungsapparats optisch angezeigt. Der Speisenzubereitungsapparat kann eine akustische und/oder optische Signaleinrichtung umfassen, die ein akustisches und/oder optisches Signal abgibt, sobald eine Zutat gemäß der nach dem Rezeptschritt erforderlichen Menge eingefüllt worden ist.

Der Speisenzubereitungsapparat kann eine Temperierungseinrichtung für das Temperieren des Speisenzubereitungsraums umfassen. Ein nächster Rezeptschritt kann das Temperieren von ein oder mehreren Zutaten in dem Speisenzubereitungsraum umfassen. Der Speisenzubereitungsapparat ist dann insbesondere so eingerichtet, dass der Speisenzubereitungsraum gesteuert durch den Rezeptschritt die ein oder mehreren Zutaten in dem Speisenzubereitungsraum automatisiert in der durch den Rezeptschritt vorgegebenen Weise temperiert. Durch den nächsten Rezeptschritt kann eine Temperatur vorgesehen sein, auf die ein oder mehrere Zutaten zu bringen sind. Der Speisenzubereitungsapparat kann so eingerichtet sein, dass dann automatisiert die ein oder mehreren Zutaten in dem Speisenzubereitungsraum gemäß Rezeptschritt temperiert werden, also auf die nach dem Rezeptschritt vorgesehene Temperatur gebracht werden. Durch den Rezeptschritt kann eine Zeitdauer für das Temperieren der ein oder mehreren Zutaten vorgesehen sein. Der Speisenzubereitungsapparat kann so eingerichtet sein, dass dieser automatisiert die ein oder mehreren Zutaten in dem Speisenzubereitungsraum für die nach dem Rezeptschritt vorgesehene Zeitdauer temperiert.

Der Speisenzubereitungsapparat kann ein Mischwerkzeug für das Mischen und/oder Zerkleinern von Zutaten im Speisenzubereitungsraum umfassen. Ein nächster Rezeptschritt kann das Mischen und/oder Zerkleinern von ein oder mehreren Zutaten in dem Speisenzubereitungsraum umfassen. Der Speisenzubereitungsapparat ist dann insbesondere so eingerichtet, dass der Speisenzubereitungsapparat gesteuert durch den Rezeptschritt die Zutaten in dem Speisenzubereitungsraum automatisiert in der durch den Rezeptschritt vorgegebenen Weise mischt und/oder zerkleinert. Durch den Rezeptschritt kann eine Zeitdauer für das Mischen und/oder Zerkleinern der Zutaten vorgesehen sein. Der Speisenzubereitungsapparat kann so eingerichtet sein, dass dieser automatisiert die ein oder mehreren Zutaten in dem Speisenzubereitungsraum für die nach dem Rezeptschritt vorgesehene Zeitdauer zerkleinert und/oder mischt. Durch den Rezeptschritt kann eine Rotationsgeschwindigkeit für das Mischwerkzeug vorgesehen sein, um Zutaten zu mischen und/oder zu zerkleinern. Der Speisenzubereitungsapparat kann so eingerichtet sein, dass dieser automatisiert die Rotationsgeschwindigkeit einstellt, die nach dem Rezeptschritt vorgesehen ist.

Der Speisenzubereitungsapparat muss nicht ein oder mehrere der vorgenannten Einstellungen automatisiert gemäß Rezeptschritt vornehmen. Stattdessen kann der Speisenzubereitungsapparat einen Benutzer optisch und/oder akustisch auffordern, eine nach einem Rezeptschritt vorgesehene Einstellung manuell vorzunehmen. Beispielsweise kann ein Benutzer also aufgefordert werden, für ein Mischen und/oder Zerkleinern von Zutaten eine Drehgeschwindigkeit für ein Mischwerkzeug manuell einzustellen.

Das Verfahren umfasst die Verwendung einer elektrisch betreibbaren Gewürzabgabevorrichtung. Die Gewürzabgabevorrichtung umfasst daher in der Regel eine in der Gewürzabgabevorrichtung vorgesehene Batterie, um elektrische Energie für den Betrieb zur Verfügung stellen zu können. Die Batterie kann wiederaufladbar sein. Es ist aber auch möglich, dass die Gewürzabgabevorrichtung über ein elektrisches Kabel mit einer externen elektrischen Energiequelle verbunden werden kann, um so für einen Betrieb mit Strom versorgt werden zu können.

Die Gewürzabgabevorrichtung umfasst zumindest eine Gewürzkammer für die Lagerung eines Gewürzes. Es handelt sich vorzugsweise um ein Trockengewürz, das in der Gewürzkammer zur Durchführung des Verfahrens gelagert wird wie zum Beispiel Pfefferkörner, gemahlener Pfeffer, Salz, Zucker, Muskatnuss oder getrocknete Kräuter. In einer Gewürzkammer kann eine Gewürzmischung gelagert sein, so zum Beispiel eine homogene Mischung aus Salz und gemahlenen Kräutern. Eine solche Mischung wird auch Kräutersalz genannt. Möglich ist aber auch eine flüssige Gewürzmischung.

Die Gewürzabgabevorrichtung umfasst eine Dosiereinrichtung, durch die eine vorbestimmte Menge Gewürz aus der Gewürzkammer entnommen werden kann und damit in dosierter Form. Die Entnahme einer vorbestimmten Menge bzw. einer vorbestimmten Dosis kann automatisiert durchgeführt werden. Durch die automatisierte Dosierung wird eine manuelle Dosierung vermieden, die leicht eine fehlerhafte Dosierung zur Folge haben könnte. Dass eine automatisierte Dosierung möglich ist, schließt nicht aus, dass auch manuell dosiert werden kann. Eine automatisierte Dosierung meint, dass ein Benutzer die Menge an Gewürz, die auf einer automatisierten Dosierung beruht, nicht beeinflussen kann. Dem steht nicht entgegen, dass es in einer Ausführungsform der Erfindung erforderlich sein kann, dass erst dann automatisiert dosiert wird, wenn diese durch einen Benutzer aktiviert wird, so zum Beispiel durch Betätigung eines Schalters oder eines Tasters. Fehlerhafte Dosierungen, die auf einem menschlichen Eingriff beruhen, werden so vermieden.

Die Gewürzabgabevorrichtung kann ein Mahlwerk umfassen, mit der beispielsweise in der Gewürzkammer gelagerte Pfefferkörner oder eine in der Gewürzkammer gelagerte Muskatnuss zerkleinert werden können. Es kann ein Elektromotor vorhanden sein, um das Mahlwerk elektrisch anzutreiben. Die Gewürzabgabevorrichtung kann so eingerichtet sein, dass das Mahlen mit dem Mahlwerk durch eine elektronische Steuereinheit gesteuert werden kann. Die elektronische Steuereinheit kann Teil der Gewürzabgabevorrichtung sein.

Die elektronische Steuereinheit kann die Steuereinheit sein, mit der das Zubereiten der Speise gemäß Rezeptschritten eines Rezepts gesteuert wird. Mit elektronischer Steuereinheit als Teil der Gewürzabgabevorrichtung ist eine Steuereinheit gemeint, die körperlich mit der Gewürzabgabevorrichtung verbunden ist und die für die Steuerung der Dosierung eingesetzt wird, grundsätzlich aber nicht darüber hinaus für die Steuerung der Zubereitung der Speise gemäß Rezeptschritten.

Durch das Mahlwerk kann ein Gewürz dosiert aus der Gewürzkammer entnommen werden und zwar durch Steuern der Mahldauer mittels einer elektronischen Steuereinheit. Das Mahlwerk kann so eingerichtet sein, dass der Mahlgrad durch die Steuereinheit eingestellt werden kann. Es kann also dann beispielsweise eingestellt werden, ob ein Pfefferkorn durch Mahlen grob oder fein zerkleinert wird. Das Mahlwerk kann so eingerichtet sein, dass die Mahlgeschwindigkeit durch eine Steuereinheit eingestellt werden kann. Es wird dann also die Drehgeschwindigkeit des Mahlwerks eingestellt. Das Mahlwerk kann folglich die Dosiereinrichtung bilden, mit der automatisiert eine Menge an Gewürz dosiert werden kann. Als Mahlwerk können handelsübliche Mahlwerke für Gewürzmühlen dienen.

Die Dosiereinrichtung kann ein oder mehrere drehbare oder verschiebbare Durchgänge umfassen. Durch Drehen oder Verschieben kann ein Durchgang eine untere Öffnung einer Gewürzkammer mit einem darin gelagerten Gewürz erreichen. Die untere Öffnung der Gewürzkammer befindet sich dann oberhalb des Durchgangs. Der Durchgang kann dann aufgrund von Schwerkraft mit Gewürz gefüllt werden. Wird der Durchgang weiter zu einer Öffnung gedreht oder verschoben, die sich unterhalb des Durchgangs befindet, so kann das in dem Durchgang befindliche Gewürz durch Schwerkraft den Durchgang nach unten verlassen. Es kann so Gewürz dosiert werden. Das Drehen oder Verschieben der ein oder mehreren Durchgänge kann wiederum durch eine elektronische Steuereinheit gesteuert werden, damit automatisiert dosiert werden kann.

Die Dosiereinrichtung kann in der aus der Druckschrift US 2016/0374486 A1 bekannten Weise beschaffen sein.

Das Verfahren umfasst folgende Schritte:
In dem Speisenzubereitungsraum wird eine Speise gesteuert durch eine elektronische Steuereinheit gemäß Rezeptschritten eines Rezepts zubereitet. Das Rezept ist also in eine Mehrzahl von Rezeptschritten unterteilt. Ein Rezeptschritt kann erfordern, dass ein Benutzer tätig wird. Ein Rezeptschritt kann aber auch so sein, dass dieser automatisiert durch den Speisenzubereitungsapparat durchgeführt wird und ein Benutzer dann also nicht tätig wird. Ein Rezeptschritt kann das Temperieren, Mischen und/oder Zerkleinern von ein oder mehreren Zutaten umfassen. Ein Rezeptschritt kann die Zugabe von ein oder mehreren Zutaten umfassen. Sollen gemäß Rezeptschritt ein oder mehrere Gewürze hinzugefügt werden, so wird dieser Rezeptschritt auch Gewürzrezeptschritt genannt. Das Rezept umfasst einen solchen Gewürzrezeptschritt, gemäß dem zumindest ein Gewürz hinzugefügt werden soll.

Wird im Rahmen der Zubereitung einer Speise der Gewürzrezeptschritt erreicht, so wird gesteuert durch die Steuereinheit ein Signal durch eine Signaleinrichtung ausgelöst. Es kann sich um ein optisches Signal und/oder ein akustisches Signal handeln. Durch das Signal wird der Benutzer darauf hingewiesen, dass ein oder mehrere Gewürze in den Speisenzubereitungsraum gebracht werden sollen. Es ist daher zu bevorzugen, dass die Gewürzabgabevorrichtung die Signaleinrichtung umfasst. Gibt nämlich die Gewürzabgabevorrichtung das Signal ab, so ist dies ein unmittelbarer Hinweis darauf, dass nun die Gewürzabgabevorrichtung zu verwenden ist, die dies signalisiert hat. Gibt es ein akustisches Signal, dann ist es für einen Benutzer besonders einfach, das Signal während der Zubereitung einer Speise zu registrieren und die Gewürzabgabevorrichtung aufzufinden.

Im Anschluss an das Signal ergreift ein Benutzer die Gewürzabgabevorrichtung und bringt die Gewürzabgabevorrichtung so zum Speisenzubereitungsraum, dass ein Gewürz aus der Gewürzabgabevorrichtung in den Speisenzubereitungsraum abgegeben werden kann. Die Gewürzabgabevorrichtung kann sich dann oberhalb einer Öffnung befinden, die in den Speisenzubereitungsraum hineinführt. Es kann aber auch sein, dass der Speisenzubereitungsraum eine Tür umfasst. Diese Tür wird geöffnet, um die Gewürzabgabevorrichtung in den Speisenzubereitungsraum für ein Würzen zu bringen.

Ein Benutzer kann aber auch im Anschluss an das Signal die Gewürzabgabevorrichtung so zu einem Messgefäß bringen, dass das Gewürz aus der Gewürzabgabevorrichtung in das Messgefäß abgegeben werden kann. Dies ist mit dem Vorteil verbunden, dass die Gewürzabgabevorrichtung nicht einer Feuchtigkeit ausgesetzt wird, die durch Zubereitung einer Speise in dem Speisenzubereitungsraum entstanden ist.

Ist die Gewürzabgabevorrichtung durch den Benutzer zum Speisenzubereitungsraum oder zum Messgefäß für ein Würzen bewegt worden, so gibt die Gewürzabgabevorrichtung die Menge an Gewürz dosiert ab, die nach dem Gewürzrezeptschritt hinzugefügt werden soll, wobei die Dosierung automatisiert durchgeführt worden ist. Die Dosierung ist also durch eine Steuereinheit gesteuert worden. Die Dosierung kann durch eine Steuereinheit unmittelbar gesteuert worden sein, die mit dem Speisenzubereitungsapparat körperlich verbunden ist. Es kann aber auch von der Steuereinheit des Speisenzubereitungsapparates eine Anweisung an die Gewürzabgabevorrichtung zur Dosierung eines Gewürzes übermittelt worden sein. In diesem Fall kann die elektronische Steuereinheit, die Teil der Gewürzabgabevorrichtung ist, das Dosieren des Gewürzes übernehmen.

Ist das Gewürz aus der Gewürzabgabevorrichtung zunächst in das Messgefäß dosiert abgegeben worden, so wird das Gewürz von hier aus weiter in den Speisenzubereitungsraum für ein Würzen gebracht. Ein Benutzer kann das Gewürz manuell gemäß Gewürzrezeptschritt aus dem Messgefäß zu bereits vorhandenen ein oder mehreren Zutaten im Speisenzubereitungsraum hinzufügen. Es ist aber auch möglich, dass dies automatisiert geschieht.

Alternativ kann die Gewürzabgabevorrichtung eine abnehmbare Sammelkammer umfassen, in der das aus der Gewürzkammer dosiert entnommene Gewürz gesammelt wird. In diesem Fall kann der Benutzer die Sammelkammer abnehmen und ihren Inhalt in den Speisenzubereitungsraum oder in das Messgefäß schütten.

Durch das Verfahren werden Fehler bei der Zubereitung einer Speise verbessert vermieden, die auf fehlerhaft dosierten Gewürzen beruhen. Das fehlerfreie Gelingen einer Speise wird so vor allem auch für ungeübte Benutzer weiter vereinfacht. Ein Fachwissen über das Würzen von Speisen ist aufgrund der Erfindung nicht erforderlich. Eine präzise Dosierung von Kleinstmengen kann realisiert werden.

In einer Ausgestaltung umfasst die Gewürzabgabevorrichtung eine Mehrzahl von Gewürzkammern. In jeder Gewürzkammer ist ein Gewürz gelagert. Ein Gewürz in einer Gewürzkammer unterscheidet sich von einem Gewürz in einer anderen Gewürzkammer. Mithilfe der Gewürzabgabevorrichtung können dann unterschiedliche Gewürze dosiert hinzugefügt werden.

In einer Ausgestaltung des Verfahrens gibt es eine Mehrzahl von Gewürzabgabevorrichtungen, die für die Zubereitung verwendet werden. Die Gewürzabgabevorrichtungen sind körperlich nicht miteinander verbunden und können unabhängig voneinander verwendet werden. Ein Gewürz in einer Gewürzabgabevorrichtung unterscheidet sich dann von einem Gewürz in einer anderen Gewürzabgabevorrichtung. So kann eine erste Gewürzabgabevorrichtung Salz enthalten und eine zweite Gewürzabgabevorrichtung Pfeffer. Ist nach einem Gewürzrezeptschritt zum Beispiel Salzen vorgesehen, so wird ein Benutzer durch ein entsprechendes Signal darauf hingewiesen, dass nun die Gewürzabgabevorrichtung mit dem Salz zu verwenden ist. Dies geschieht am zuverlässigsten und am einfachsten, indem die Gewürzabgabevorrichtung mit dem darin gelagerten Salz mittels Lautsprecher ein akustisches und/oder mittels Bildschirm oder Leuchtmittel ein optisches Signal abgibt. Ist nach einem Gewürzrezeptschritt Pfeffern vorgesehen, so wird ein Benutzer durch ein entsprechendes Signal darauf hingewiesen, dass nun die Gewürzabgabevorrichtung mit dem Pfeffer zu verwenden ist. Dies geschieht am zuverlässigsten und am einfachsten, indem die Gewürzabgabevorrichtung mit dem darin gelagerten Pfeffer ein Signal abgibt. Gibt die jeweils benötigte Gewürzabgabevorrichtung ein Signal ab, so werden Verwechslungen verbessert vermieden.

In einer Ausgestaltung sollen gemäß dem Gewürzrezeptschritt eine Mehrzahl von Gewürzen hinzugefügt werden, die in Gewürzkammern der Gewürzabgabevorrichtung gelagert sind. Die Gewürze werden dann entsprechend dosiert aus den Gewürzkammern entnommen und in Form einer Gewürzmischung hinzugefügt, um den Zeitaufwand zu minimieren. Mit Gewürzmischung ist gemeint, dass die Gewürze gemeinsam hinzugefügt werden, also nicht zeitlich nacheinander und damit voneinander getrennt. Es kann beispielsweise sein, dass eine dosierte Entnahme der vorgesehenen Gewürze aus den Gewürzkammern bereits vor Erreichen des Gewürzrezeptschritts durchgeführt worden ist oder direkt im Anschluss an das Erreichen des Gewürzrezeptschritts. Die Gewürzabgabevorrichtung kann eine Sammelkammer umfassen, in der die dosiert aus den Gewürzkammern entnommenen Gewürze gesammelt werden können. Die in der Sammelkammer gesammelten Gewürze bilden dann eine Gewürzmischung im Sinne der Erfindung. Sobald die Gewürzmischung in den Speisenzubereitungsraum gebracht werden soll, wird beispielsweise ein Verschluss der Sammelkammer so geöffnet, dass die Gewürzmischung aus der Sammelkammer in den Speisenzubereitungsraum gebracht werden kann oder zumindest in ein Messgefäß. Der Verschluss kann in einer Ausgestaltung manuell geöffnet werden. Der Verschluss kann in einer Ausgestaltung motorisiert geöffnet werden. Das Öffnen des Verschlusses kann in einer Ausgestaltung durch eine der genannten Steuereinheiten gesteuert erfolgen. Der Verschluss ist nicht zwingend erforderlich. Die Sammelkammer kann eine seitliche Öffnung aufweisen, die nicht verschlossen werden kann und über die Gewürze aus der Sammelkammer abgegeben werden können.

Ist die Sammelkammer die genannte abnehmbare Sammelkammer, so ist die genannte Öffnung mit dem Verschluss nicht erforderlich und kann also entfallen. Eine seitliche Öffnung, die nicht verschlossen werden kann, ist dann ebenfalls nicht erforderlich.

Die Steuereinheit, die die Zubereitung einer Speise steuert, kann in den Speisenzubereitungsapparat integriert sein, also körperlich mit weiteren Komponenten des Speisenzubereitungsapparats fest und dauerhaft verbunden sein. Es ist aber auch möglich, dass die Steuereinheit körperlich von weiteren Komponenten des Speisenzubereitungsapparats getrennt ist und beispielsweise eine Steuerung über einen drahtlosen Austausch von Daten erfolgt.

In einer Ausgestaltung des Verfahrens sendet der Speisenzubereitungsapparat Steuerungsbefehle der Steuereinheit drahtlos an die Gewürzabgabevorrichtung, um die Gewürzabgabevorrichtung zu veranlassen, ein Gewürz zu dosieren. Im Anschluss an den Empfang dieser Steuerungsbefehle wird automatisiert Gewürz aus der Gewürzkammer dosiert entnommen.

Der Speisenzubereitungsapparat kann die Signaleinrichtung umfassen. Bevorzugt umfasst jedoch die Gewürzabgabevorrichtung die Signaleinrichtung, da dann mit dem Auslösen eines Signals auch sofort die Aufmerksamkeit des Benutzers auf die Gewürzabgabevorrichtung gerichtet wird. Es ist aber auch möglich, dass die Signaleinrichtung eine vom Speisenzubereitungsapparat und von der Gewürzabgabevorrichtung körperlich getrennte Einrichtung ist, die von der Steuereinheit beispielsweise drahtlos Daten empfangen kann.

Dass die Gewürzabgabevorrichtung eine elektrische Gewürzabgabevorrichtung ist, ist zur Lösung der gestellten Aufgabe nicht zwingend erforderlich. Das Verfahren kann mit Vorteil auch mit einer Gewürzabgabevorrichtung durchgeführt werden, die eine mechanisch zu betätigende Dosiereinrichtung umfasst. Eine solche Gewürzabgabevorrichtung kann beispielsweise einen Drehmechanismus umfassen, der stufenweise gedreht werden kann, so zum Beispiel in 180° Schritten. Die Stufen können durch Markierungen angezeigt werden.

Die Stufen können durch einen Rastmechanismus einem Benutzer angezeigt werden. Die Gewürzabgabevorrichtung kann so eingerichtet sein, dass pro Stufe eine definierte Menge an Gewürz abgegeben wird, wodurch die Dosierung erleichtert wird. Wird ein Gewürz Rezeptschritt erreicht, so kann ein Benutzer dann beispielsweise über eine Darstellung auf einem Bildschirm aufgefordert werden, den Drehmechanismus gemäß einer angegebenen Zahl von Stufen zu drehen, um so verbessert dosiert zu würzen. Zwar ist es bei dieser Ausgestaltung möglich, dass ein Benutzer versehentlich den Drehmechanismus über die für eine Dosierung vorgegebene Zahl an Stufen hinaus dreht oder aber den Drehmechanismus nicht bis zur vorgegebenen Zahl der Stufen dreht. Dennoch ist es so verbessert möglich, dass eine Speise selbst für ungeübte Benutzer zuverlässig gelingt, da ein Benutzer eine Speise mithilfe von leicht verständlichen Anweisungen zubereiten kann, ohne über Fachwissen verfügen zu müssen. Eine solche Abgabevorrichtung kann in Bezug auf die Mechanik wie die aus der Druckschrift US 2016/0374486 A1 bekannte Dosiereinheit beschaffen sein.

Die Erfindung betrifft außerdem eine elektrische, zumindest zum Teil handgeführte Gewürzabgabevorrichtung für die Durchführung eines erfindungsgemäßen Verfahrens. Die Gewürzabgabevorrichtung umfasst zumindest eine Gewürzkammer, in der ein Gewürz gelagert werden kann. Die Gewürzabgabevorrichtung umfasst eine Dosiereinrichtung, die in der Gewürzkammer gelagertes Gewürz automatisiert dosieren kann. Die Gewürzabgabevorrichtung umfasst eine Abgabeeinrichtung, mit der die dosierte Menge an Gewürz in eine Speise abgegeben werden kann. Durch die Möglichkeit, automatisiert dosieren zu können, kann entsprechend verbessert das Gelingen einer Speise sichergestellt werden.

Mit "zumindest zum Teil handgeführt" ist gemeint, dass die Gewürzabgabevorrichtung oder ein Teil davon dazu bestimmt und geeignet ist, in der Hand gehalten und mit der Hand geführt zu werden, um eine Speise zu würzen. Es handelt sich also nicht um eine Vorrichtung, die bereits aufgrund ihrer Größe und ihres Gewichts nicht geeignet ist, um für ein Würzen mit einer Hand gehalten zu werden. Es handelt sich grundsätzlich auch nicht um eine Vorrichtung, die nicht nur würzen kann, sondern die darüber hinaus beispielsweise einen Speisenzubereitungsraum umfasst, um auch andere Aufgaben im Rahmen der Zubereitung einer Speise übernehmen zu können. Es kann also sein, dass die Gewürzabgabevorrichtung für ein Würzen vollständig mit der Hand geführt werden muss, wie dies von üblichen Pfeffermühlen für Privathaushalte bekannt ist. Es kann aber auch sein, dass nur ein Teil der Gewürzabgabevorrichtung für ein Würzen mit der Hand geführt werden muss.

Die Abgabeeinrichtung kann eine abnehmbare Sammelkammer sein, in der Gewürz, welches durch die Gewürzabgabevorrichtung dosiert worden ist, gesammelt werden kann. Das mit der Hand zu führende Teil der Gewürzabgabevorrichtung kann dann diese abnehmbare Sammelkammer sein. In der Sammelkammer gesammeltes Gewürz kann dann abgegeben werden, indem die Sammelkammer abgenommen und ihr Inhalt für ein Würzen ausgeschüttet wird. Die abnehmbare Sammelkammer kann in der Art einer Schublade mit dem übrigen Teil der Gewürzabgabevorrichtung lösbar verbunden sein. Die Sammelkammer kann dann also wie eine Schublade herausgezogen werden und wieder eingesetzt werden. Die abnehmbare Sammelkammer kann durch einen Schraubverschluss oder Bajonettverschluss mit dem übrigen Teil der Gewürzabgabevorrichtung lösbar verbunden sein. Durch eine Drehbewegung kann die Sammelkammer dann von dem übrigen Teil der Gewürzabgabevorrichtung gelöst bzw. mit dem übrigen Teil der Gewürzabgabevorrichtung verbunden werden.

Die Abgabeeinrichtung kann eine Sammelkammer mit einer seitlichen Öffnung sein, in der Gewürz, welches durch die Gewürzabgabevorrichtung dosiert worden ist, gesammelt werden kann. Die seitliche Öffnung befindet sich dann oberhalb des Bodens der Sammelkammer. In der Sammelkammer gesammeltes Gewürz kann dann abgegeben werden, indem die Gewürzabgabevorrichtung so gekippt wird, dass in der Sammelkammer gesammeltes Gewürz durch Schwerkraft durch die seitliche Öffnung hindurch herausfällt. Die seitliche Öffnung kann dauerhaft geöffnet sein. Es ist aber auch möglich, dass es einen Verschluss für die seitliche Öffnung gibt. Der Verschluss kann ein Stöpsel sein. Der Verschluss kann eine schwenkbare Klappe sein. Der Verschluss kann ein Schraubverschluss sein. Umfasst die Öffnung einen Verschluss, dann kann die Öffnung auch im Boden der Sammelkammer vorhanden sein.

In einer Ausgestaltung der Erfindung umfasst die Gewürzabgabevorrichtung eine Betätigungseinrichtung, deren Betätigung zur Folge hat, dass durch die Abgabeeinrichtung eine durch die Dosiereinrichtung dosierte Menge an Gewürz abgegeben wird. Die Abgabeeinrichtung kann rein mechanisch sein. Die Betätigung kann also zur Folge haben, dass eine durch einen Verschluss verschlossene Öffnung mechanisch geöffnet wird. Im Anschluss daran kann Gewürz beispielsweise durch Schwerkraft abgegeben werden. Die Abgabeeinrichtung kann aber auch ein elektrisches Element umfassen, welches bewirkt, dass die Öffnung elektrisch geöffnet wird. Das elektrische Element kann ein Elektromotor oder ein Elektromagnet sein. So kann bei Betätigung der Elektromagnet eingeschaltet werden. Im Anschluss daran kann der Elektromagnet beispielsweise einen Verschluss aufgrund von Magnetkraft anziehen oder abstoßen, umso die Öffnung zu öffnen. Der Verschluss kann dann nach Ausschalten des Elektromagneten beispielsweise durch Federkraft in seine Schließstellung zurückbewegt und die Öffnung dadurch wieder verschlossen werden.

In einer Ausgestaltung der Erfindung umfasst die Gewürzabgabevorrichtung eine Detektiereinrichtung, mit der detektiert, also ermittelt, werden kann, ob sich die Gewürzabgabevorrichtung oberhalb eines Speisenzubereitungsraums befindet. Die Detektiereinrichtung kann beispielsweise einen RFID Chip umfassen. Der Speisenzubereitungsapparat umfasst dann einen Transponder für den RFID Chip. Der Transponder ist so angeordnet, dass dieser den RFID Chip lokalisiert, wenn sich die Gewürzabgabevorrichtung oberhalb des Speisenzubereitungsraums befindet. Es kann so detektiert bzw. ermittelt werden, dass bzw. ob sich die Gewürzabgabevorrichtung oberhalb des Speisenzubereitungsraums des Speisenzubereitungsapparats befindet. Alternativ kann die Detektiereinrichtung den Transponder umfassen und der Speisenzubereitungsapparat den RFID Chip. Es ist aber zu bevorzugen, dass die Detektiereinrichtung den RFID Chip umfasst, um den Stromverbrauch für die Gewürzabgabevorrichtung zu minimieren. Dies ist von besonderem Vorteil, wenn die Gewürzabgabevorrichtung mithilfe einer Batterie betrieben wird. Es werden so verbessert lange Standzeiten für die Gewürzabgabevorrichtung ermöglicht, ohne dafür eine übermäßig große Batterie bereitstellen zu müssen. Das Detektieren kann also durch eine Nahfeldkommunikation (NFC) realisiert sein. Anstelle der RFID-Technik kann auch ein anderer kontaktloser Austausch von Daten über kurze Strecken von wenigen Zentimetern eingesetzt werden, um zu detektieren, dass bzw. ob sich die Gewürzabgabevorrichtung oberhalb des Speisenzubereitungsraums des Speisenzubereitungsapparats befindet. Die Detektiereinrichtung kann zu diesem Zweck beispielsweise eine Spule umfassen, die für einen solchen kontaktlosen Austausch von Daten über kurze Strecken eingesetzt wird. Die Detektiereinrichtung kann auch ein oder mehrere andere Sensoren umfassen, mit denen eine hinreichende Annäherung an den Speisenzubereitungsraum ermittelt werden kann. So können magnetische Kräfte genutzt werden, um eine Annäherung zu detektieren. Zu diesem Zweck kann die Detektiereinrichtung einen Permanentmagneten umfassen. Der Speisenzubereitungsapparat kann einen Magnetfelddetektor umfassen. Wird mithilfe des Magnetfelddetektors festgestellt, dass sich der Permanentmagnet der Detektiereinrichtung nähert, so kann dadurch ermittelt werden, dass die Gewürzabgabevorrichtung sich oberhalb des Speisenzubereitungsraums befindet.

Die Gewürzabgabevorrichtung kann so eingerichtet sein, dass die Abgabeeinrichtung eine durch die Dosiereinrichtung dosierte Menge an Gewürz abgibt, wenn durch die Detektiereinrichtung detektiert wird, dass sich die Gewürzabgabevorrichtung oberhalb eines Speisenzubereitungsraums befindet. Das Zubereiten einer Speise wird für einen Benutzer dadurch weiter vereinfacht.

In einer Ausgestaltung der Erfindung umfasst die Gewürzabgabevorrichtung einen mechanischen Öffnungsmechanismus, der durch Aufsetzen auf den Speisenzubereitungsraum mechanisch geöffnet werden kann. Ein Benutzer setzt bei dieser Ausgestaltung die Gewürzabgabevorrichtung auf den Speisenzubereitungsraum in der dafür vorgesehenen Weise auf, wodurch die Gewürzabgabevorrichtung so geöffnet wird, dass entsprechend dosierte Gewürze aus der Gewürzabgabevorrichtung herausfallen. Die Gewürzabgabevorrichtung kann einen Klappmechanismus so umfassen, dass durch das Aufsetzen eine Klappe geöffnet wird. Durch eine so geöffnete Öffnung kann dann Gewürz aus der Gewürzabgabevorrichtung herausfallen.

In einer Ausgestaltung der Erfindung umfasst die Gewürzabgabevorrichtung eine drahtlose Schnittstelle für ein Empfangen und/oder Versenden von Daten. Dadurch ist es beispielsweise möglich, dass an die Gewürzabgabevorrichtung ein oder mehrere Befehle übermittelt werden, die die Gewürzabgabevorrichtung veranlassen, ein Gewürz zu dosieren. Dieses wird dann dosiert aus der Gewürzkammer entnommen, in der sich das Gewürz befindet.

In einer Ausgestaltung der Erfindung umfasst die Gewürzabgabevorrichtung eine Signaleinrichtung, die durch das Empfangen von Daten über eine Schnittstelle veranlasst werden kann, ein Signal abzugeben. Die Schnittstelle ist insbesondere die vorgenannte drahtlose Schnittstelle.

Die Signaleinrichtung kann eine optische Signaleinrichtung und/oder eine akustische Signaleinrichtung sein. Eine optische Signaleinrichtung kann beispielsweise durch ein oder mehrere LEDs realisiert sein. Die optische Signaleinrichtung kann einen Bildschirm umfassen. Als akustische Signalquelle kann ein Lautsprecher dienen.

In einer Ausgestaltung der Erfindung umfasst die Gewürzabgabevorrichtung eine Mehrzahl von Gewürzkammern zur Lagerung von verschiedenen Gewürzen. Es kann nur eine Dosiereinrichtung vorhanden sein, die ein Gewürz aus jeder Gewürzkammer dosieren kann. So können beispielsweise zwei Gewürzkammern vorhanden sein. Die Dosiereinrichtung kann einen Durchgang umfassen, der wahlweise zu einer unteren Öffnung der einen oder der anderen Gewürzkammer bewegt werden kann, um dadurch dosiert Gewürz aus der gewählten Gewürzkammer entnehmen zu können.

Es kann aber auch für jede Gewürzkammer ein eigener Durchgang vorgesehen sein, mit dessen Hilfe dosiert wird. Auf diese Weise wird eine Verunreinigung eines Gewürzes durch Restbestandteile eines anderen Gewürzes in einem Durchgang vermieden. Eine jede Gewürzkammer kann eine Kartusche mit eigener Dosiereinheit sein, wie diese beispielsweise aus der Druckschrift US 2016/0374486 A1 bekannt ist.

In einer Ausgestaltung der Erfindung umfasst die Gewürzabgabevorrichtung eine so eingerichtete Abgabevorrichtung, dass diese eine Mehrzahl von verschiedenen Gewürzen, die durch die Dosiereinrichtung dosiert wurden, als Gewürzmischung abgeben kann. Diese Abgabevorrichtung kann eine Sammelkammer umfassen, in die Gewürze aus Gewürzkammern dosiert gebracht werden können, bevor Gewürze aus der Sammelkammer die Gewürzabgabevorrichtung beispielsweise durch eine verschließbare Öffnung hindurch verlassen können. In diesem Fall wird die Öffnung erst dann geöffnet, wenn in der Gewürzkammer gesammelte ein oder mehrere Gewürze abgegeben werden sollen.

Eine Abgabe durch die Abgabevorrichtung kann beispielsweise durch Knopfdruck bzw. Druck auf einen Taster bewirkt werden.

In einer Ausgestaltung der Erfindung gibt es ein Datenverarbeitungsprogramm und eine Benutzeroberfläche für die Gewürzabgabevorrichtung, damit ein Benutzer mithilfe der Benutzeroberfläche die Gewürzabgabevorrichtung individuell steuern kann. Mithilfe der Benutzeroberfläche kann in einer Ausgestaltung beispielsweise ein Gewürz dosiert werden. Die Benutzeroberfläche ist dann also so gestaltet, dass ein Benutzer eine gewünschte Dosierung einstellen kann. Durch diese Ausgestaltung ist es möglich, dass ein Benutzer auch nach eigenen geschmacklichen Vorlieben würzen kann. Ein Benutzer muss also nicht im Rahmen der Zubereitung einer Speise von der automatisierten Dosierung eines Gewürzes Gebrauch machen. Er kann stattdessen zu gegebener Zeit mithilfe der Benutzeroberfläche individuell würzen. Das Datenverarbeitungsprogramm kann in einer Ausgestaltung für eine Installation auf einem Mobilfunkgerät vorgesehen sein. Es kann aber auch dafür vorgesehen sein, dass dieses auf dem Speisenzubereitungsapparat installiert wird oder aber bereits in der Gewürzabgabevorrichtung installiert ist. Ein individuelles Anpassen von Speisen an geschmackliche Vorlieben mit geringstem Aufwand und mit höchster Ergebnisqualität wird dadurch möglich. Das Datenverarbeitungsprogramm kann Teil eines Betriebssystems des Speisenzubereitungsapparats oder der Gewürzabgabevorrichtung sein.

Nachfolgend wird die Erfindung anhand von Figuren näher verdeutlicht. Es handelt sich lediglich um Beispiele, die also den Schutzbereich der Patentansprüche nicht einschränken.

Es zeigen:
- Figur 1:: zylinderförmige Gewürzabgabevorrichtung;
- Figur 2:: Schnittdarstellung durch die Gewürzabgabevorrichtung aus Figur 1;
- Figur 3:: quaderförmige Gewürzabgabevorrichtung;
- Figur 4:: Aufsicht auf Gewürzabgabevorrichtung;
- Figur 5:: Gewürzabgabevorrichtung mit stationären Komponenten;
- Figur 6:: Gewürzabgabevorrichtung mit stationären Komponenten und Schublade als Sammelkammer;
- Figur 7:: Dosiereinheit;
- Figur 8:: Küchenmaschine.

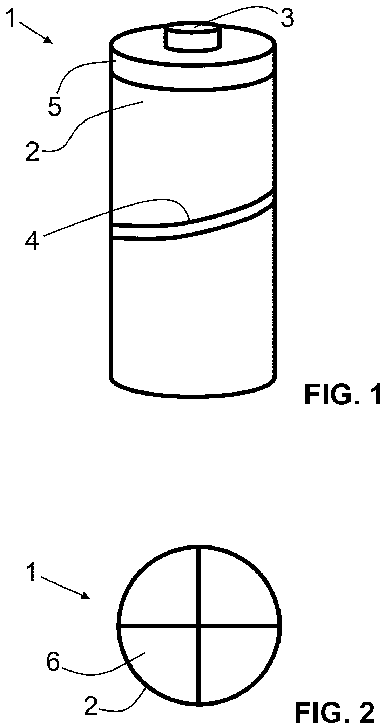

Die Figur 1 zeigt eine erfindungsgemäße handgeführte Gewürzabgabevorrichtung 1 mit einem Gehäuse 2, welches wie in der Figur 1 gezeigt zylinderförmig sein kann. Die Gewürzabgabevorrichtung 1 kann ähnlich einer marktüblichen Pfeffermühle mit einer Hand gehalten und bedient werden. An der Oberseite des Gehäuses 2 kann sich ein Taster 3 befinden, der gedrückt werden kann. Durch Drücken des Tasters 3 kann Gewürz aus der Gewürzabgabevorrichtung 1 ausgegeben werden. Wird also ein Benutzer im Rahmen eines erfindungsgemäßen Verfahrens durch ein Signal dazu aufgefordert, Zutaten in einem Speisenzubereitungsgefäß zu würzen, so kann der Benutzer die Gewürzabgabevorrichtung 1 über das Speisenzubereitungsgefäß halten und durch Druck auf den Taster 3 den Würzvorgang durchführen. Es werden dann automatisch die erforderlichen Gewürze in entsprechenden Mengen in das Speisenzubereitungsgefäß dosiert abgegeben.

Die Gewürzabgabevorrichtung 1 kann einen LED Streifen 4 als Signaleinrichtung aufweisen. Der LED Streifen 4 kann ringförmig um das Gehäuse 2 herum verlaufen. Dadurch ist sichergestellt, dass der LED Streifen 4 stets sichtbar ist, wenn die Gewürzabgabevorrichtung 1 sich im Sichtfeld des Benutzers befindet. Der LED Streifen 4 kann vorzugsweise in unterschiedlichen Farben leuchten. Es ist dadurch möglich, durch Auswahl einer Lichtfarbe eine Bedeutung zu signalisieren. So kann beispielsweise eine grüne Lichtfarbe signalisieren, dass die Gewürzabgabevorrichtung 1 betriebsbereit ist. Eine gelbe Lichtfarbe kann signalisieren, dass mithilfe der Gewürzabgabevorrichtung 1 gemäß einem Rezeptschritt Zutaten in einem Speisezubereitungsraum mit dieser Gewürzabgabevorrichtung 1 gewürzt werden sollen. Eine orange Lichtfarbe kann beispielsweise signalisieren, dass eine wiederaufladbare Batterie der Gewürzabgabevorrichtung 1 aufgeladen oder eine nicht wiederaufladbare Batterie ausgetauscht werden sollte. Die Gewürzabgabevorrichtung 1 kann eine abnehmbare Kappe 5 umfassen. Die Kappe 5 kann beispielsweise abgeschraubt werden, um Gewürzkammern in der Gewürzabgabevorrichtung 1 wieder befüllen zu können.

Anstelle eines LED Streifens 4 können auch eine Mehrzahl von Lichtquellen um den Umfang des Gehäuses 2 herum vorhanden sein, damit ein Benutzer zumindest eine Lichtquelle sehen kann, wenn sich die Gewürzabgabevorrichtung 1 in seinem Blickfeld befindet. Eine jede Lichtquelle kann dann zum Beispiel punktförmig sein.

Die Figur 2 zeigt einen Schnitt durch die Gewürzabgabevorrichtung 1 aus Figur 1. Dieser Schnittdarstellung ist zu entnehmen, dass es insgesamt vier Gewürzkammern 6 innerhalb des Gehäuses 2 gibt, die für eine Lagerung von vier verschiedenen Gewürzen vorhanden sind. Anstelle von vier Gewürzkammern 6 können auch mehr oder weniger Gewürzkammern vorhanden sein.

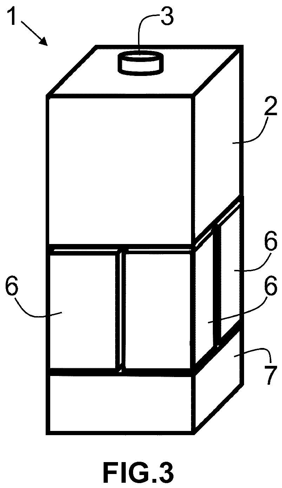

Die Figur 3 zeigt eine erfindungsgemäße Gewürzabgabevorrichtung 1 mit einem Gehäuse 2, welches wie in der Figur 3 gezeigt quaderförmig sein kann. Die Gewürzabgabevorrichtung 1 kann ähnlich einer marktüblichen Pfeffermühle mit einer Hand gehalten und bedient werden. Im Gehäuse 2 können sich ein oder mehrere elektrische Antriebe befinden. Ein elektrischer Antrieb kann vorgesehen sein, um mithilfe des elektrischen Antriebs ein Gewürz dosieren zu können. Im Gehäuse 2 kann sich eine Sende- und/oder Empfangseinheit befinden, um Daten drahtlos empfangen und/oder drahtlos versenden zu können. Im Gehäuse 2 kann sich eine elektronische Steuereinheit befinden. Die Steuereinheit kann einen Prozessor und ein oder mehrere elektronische Speicherbausteine umfassen.

Im Gehäuse 2 können sich Rasteinrichtungen befinden, mit denen die Gewürzkammern 6 verrastet werden können, wenn diese wie in der Figur 3 gezeigt eingesetzt sind. Die Gewürzkammern können lösbar verrastet sein, damit Gewürzkammern 6 entfernt und ausgetauscht werden können.

Ein elektrischer Antrieb innerhalb des Gehäuses 2 kann vorgesehen sein, um Gewürzkammern 6 zu fixieren, wenn diese eingesetzt sind. Mit einem solchen elektrischen Antrieb kann die Fixierung gelöst werden, um ein oder mehrere Gewürzkammern austauschen zu können.

Die Gewürzkammern 6 sind für die Lagerung von Gewürzen vorgesehen und zwar insbesondere für die Lagerung von Trockengewürzen wie Salz, Pfeffer, Zucker oder einer Gewürzmischung wie Currypulver. Die Gewürzkammern 6 können ausgetauscht werden, um eine leere Gewürzkammer 6 gegen eine volle Gewürzkammer 6 tauschen zu können. Anstelle von vier Gewürzkammern 6 können auch mehr oder weniger Gewürzkammern 6 für Gewürze vorgesehen sein.

Unterhalb der Gewürzkammern 6 kann eine nach oben offene Sammelkammer 7 für Gewürze vorhanden sein. Die Sammelkammer 7 kann abnehmbar sein, um diese zu einem Speisenzubereitungsraum zwecks Entleerung bringen zu können, nachdem ein oder mehrere Gewürze dosiert aus den ein oder mehreren Gewürzkammern 6 in die Sammelkammer 7 gebracht worden sind. Wird also ein Benutzer im Rahmen eines erfindungsgemäßen Verfahrens durch ein Signal dazu aufgefordert, Zutaten in einem Speisenzubereitungsgefäß zu würzen, so kann der Benutzer die Sammelkammer 7 abnehmen und ihren Inhalt in das das Speisenzubereitungsgefäß schütten, um so zu würzen. Es werden dann auf diese Weise die erforderlichen Gewürze in entsprechenden Mengen in das Speisenzubereitungsgefäß dosiert abgegeben. Die Sammelkammer 7 kann in Form einer Schublade mit dem übrigen Teil der Gewürzabgabevorrichtung 1 verbunden sein.

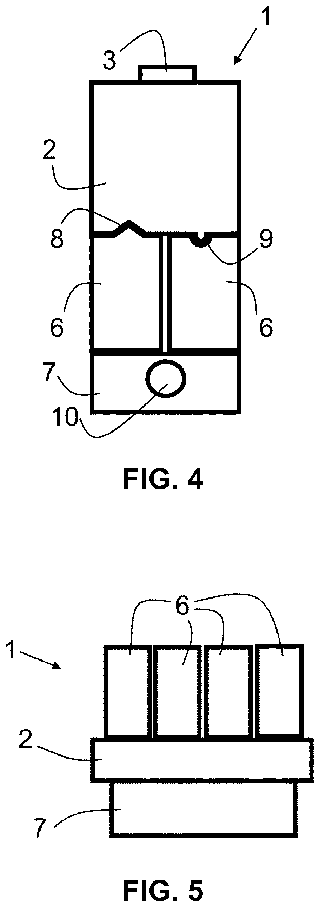

Die Figur 4 zeigt eine Aufsicht auf eine erfindungsgemäße Gewürzabgabevorrichtung 1. Die Gewürzkammern 6 sowie das Gehäuse 2 weisen miteinander korrespondierende Ausbuchtungen bzw. Vorsprünge 8 und 9 so auf, dass jede Gewürzkammer 6 nur an einer einzigen dafür vorgesehenen Stelle eingesetzt werden kann. So kann die links gezeigte Gewürzkammer 6 nicht auf der rechten Seite eingesetzt werden und umgekehrt. Es können so Verwechslungen vermieden werden, die zu fehlerhaften Ergebnissen beim Zubereiten einer Speise führen könnten. Bei dieser Ausgestaltung ist es von Vorteil, dass Gewürzkammern 6 nicht vom Endverbraucher wieder befüllt werden können, um Fehler beim Wiederbefüllen durch einen Endverbraucher bzw. Benutzer zu vermeiden.

In einer Ausgestaltung der Erfindung kann aber auch grafisch verdeutlicht werden, welche Gewürzkammer 6 an welcher Stelle eingesetzt werden kann. So kann eine erste Gewürzkammer 6 beispielsweise gelb gefärbt sein und der entsprechende Teil oberhalb des Gehäuses ebenfalls gelb. Eine zweite Gewürzkammer sechs kann grün gefärbt sein und der entsprechende Teil oberhalb des Gehäuses ebenfalls grün. Über solche Farbmarkierungen kann dann optisch leicht festgestellt werden, ob Gewürzkammern mit darin befindlichen Gewürzen zutreffend eingesetzt sind. Auch diese Ausgestaltung ist geeignet, um Verwechselungen zu vermeiden, die zu fehlerhaften Ergebnissen beim Zubereiten einer Speise führen könnten.

Die Sammelkammer 7 kann eine seitliche Öffnung 10 umfassen, über die der Inhalt der Sammelkammer 7 für ein Würzen geleert werden kann.

Die Figur 5 zeigt eine zum Teil handgeführte erfindungsgemäße Gewürzabgabevorrichtung 1 mit einem Gehäuse 2, welches wie gezeigt quaderförmig sein kann. Im Gehäuse 2 können sich ein oder mehrere elektrische Antriebe befinden. Ein elektrischer Antrieb kann vorgesehen sein, um mithilfe des elektrischen Antriebs ein Gewürz dosieren zu können. Im Gehäuse 2 kann sich eine Sende- und/oder Empfangseinheit befinden, um Daten drahtlos empfangen und/oder drahtlos versenden zu können. Im Gehäuse 2 kann sich eine elektronische Steuereinheit befinden. Die Steuereinheit kann einen Prozessor und ein oder mehrere elektronische Speicherbausteine umfassen.

Im Gehäuse 2 können sich Rasteinrichtungen befinden, mit denen auf das Gehäuse aufgesetzte Gewürzkammern 6 verrastet werden können, wenn diese wie in der Figur 5 gezeigt aufgesetzt sind. Die Gewürzkammern 6 können lösbar verrastet sein, damit Gewürzkammern 6 entfernt und ausgetauscht werden können.

Ein elektrischer Antrieb innerhalb des Gehäuses 2 kann vorgesehen sein, um Gewürzkammern 6 zu fixieren, wenn diese aufgesetzt sind. Mit einem solchen elektrischen Antrieb kann die Fixierung gelöst werden, um ein oder mehrere Gewürzkammern 6 austauschen zu können.

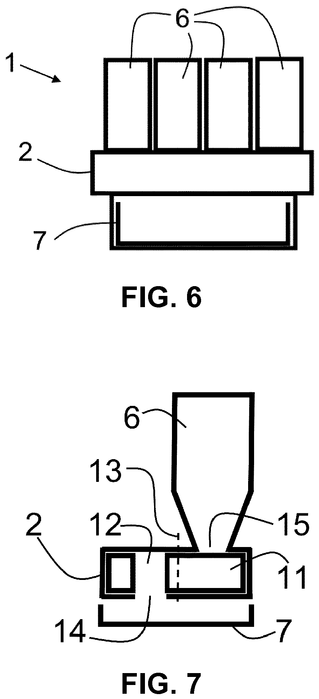

Unterhalb des Gehäuses 2 kann eine nach oben offene Sammelkammer 7 für ein Sammeln von Gewürzen vorhanden sein. Die Sammelkammer 7 ist abnehmbar, um diese zu einem Speisenzubereitungsraum zwecks Entleerung bringen zu können, nachdem ein oder mehrere Gewürze dosiert aus den ein oder mehreren Gewürzkammern 6 in die Sammelkammer 7 gebracht worden sind. Wird also ein Benutzer im Rahmen eines erfindungsgemäßen Verfahrens durch ein Signal dazu aufgefordert, Zutaten in einem Speisenzubereitungsgefäß zu würzen, so kann der Benutzer die Sammelkammer 7 abnehmen und ihren Inhalt in das Speisenzubereitungsgefäß schütten, um so zu würzen. Es werden dann auf diese Weise die erforderlichen Gewürze in entsprechenden Mengen in das Speisenzubereitungsgefäß dosiert abgegeben. Die Sammelkammer 7 kann in Form einer Schublade mit dem übrigen Teil der Gewürzabgabevorrichtung 1 verbunden sein, wie dies in der Figur 6 angedeutet wird. Gehäuse 2 und Gewürzkammern 6 sind für eine stationäre Verwendung vorgesehen. Nur die Sammelkammer 7 soll mit der Hand geführt werden, um würzen zu können. Das Gehäuse 2 kann daher beispielsweise an einer Wand dauerhaft befestigt sein.

Die in den Figuren 5 und 6 gezeigten Ausführungsformen sind besonders für den Fall geeignet, dass mehr als vier Gewürzkammern 6 eingesetzt werden sollen. So können sich hinter den vier gezeigten Gewürzkammern 6 weitere vier Gewürzkammern 6 befinden, sodass diese Gewürzabgabevorrichtung 1 insgesamt dann acht Gewürzkammern 6 umfasst.

Vorzugsweise ist es bei allen in den Figuren 1 bis 6 gezeigten Gewürzabgabevorrichtungen 1 möglich, manuell definierte Dosiermengen abgeben zu können. Gewürzabgabevorrichtungen 1, die einen Taster 3 umfassen, können so eingerichtet sein, dass durch mehrfaches Drücken des Tasters 3 eine der Gewürzkammern 6 ausgewählt werden kann, so zum Beispiel, wenn sich die Gewürzabgabevorrichtung in einem dafür vorgesehenen Offline-Modus befindet, bei dem kein automatisiertes Würzen stattfindet. Ist eine Gewürzkammer 6 ausgewählt worden, so kann beispielsweise ein langes Drücken des Tasters 3 bewirken, dass Gewürz aus der ausgewählten Gewürzkammer 6 entnommen wird, solange der Taster 3 gedrückt wird. Gewürzkammern 6 können farblich verschieden sein. Durch eine optische Signaleinrichtung 4 kann dann allein durch Anzeige einer Farbe signalisiert werden, welche Gewürzkammer 6 ausgewählt wurde.

Bei den Gewürzabgabevorrichtungen 1, die eine abnehmbare Sammelkammer 7 umfassen, kann in einer Sammelkammer 7 befindliches Gewürz manuell dosiert zu einer Speise hinzugefügt werden, indem nur ein gewünschter Teil aus einer Sammelkammer 7 einer Speise hinzugefügt wird. Eine manuelle Dosierung kann auch durch eine Fernsteuerung beispielsweise mithilfe eines Mobiltelefons und einem darauf installiertem Datenverarbeitungsprogramm möglich sein.

Die Figur 7 verdeutlicht ein Beispiel für eine Dosiereinheit. Die Dosiereinheit weist einen Kranz 11 mit einem Durchgang 12 auf. Der Kranz 11 kann um eine Achse 13 gedreht werden. Unterhalb des Durchgangs 12 befindet sich eine Öffnung 14, die zu einer Sammelkammer 7 führt. Befindet sich ein Gewürz im Durchgang 12, so gelangt dieses Gewürz in die Kammer 7 hinein, sobald die in der Figur 7 gezeigte Stellung durch Drehen des Kranzes 11 erreicht ist. Für ein Dosieren wird der Kranz 11 um die Achse 13 gedreht, bis der Durchgang 12 sich unter der Öffnung 15 der Gewürzkammer 6 befindet. Der Durchgang 12 wird dann mit dem in der Gewürzkammer 6 befindlichem Gewürz gefüllt. Wird im Anschluss daran der Kranz 11 um 180° weitergedreht, so fällt dann das Gewürz in die Sammelkammer 7 hinein. Dieser Vorgang wird so oft wiederholt, bis sich die gewünschte Menge Gewürz in der Sammelkammer 7 befindet.

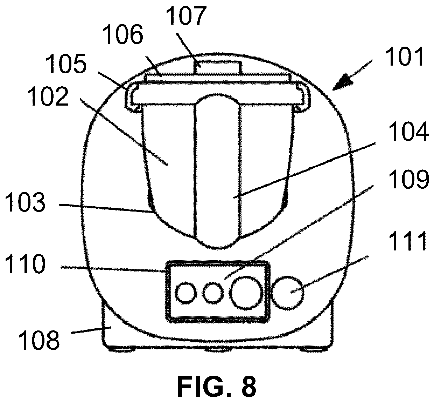

Die Figur 8 zeigt eine zur Durchführung eines erfindungsgemäßen Verfahrens geeignete Küchenmaschine 101. Die Küchenmaschine 101 umfasst als Speisenzubereitungsraum ein Speisenzubereitungsgefäß 102, welches in eine Halterung 103 der Küchenmaschine 101 eingesetzt ist. Das Speisenzubereitungsgefäß 102 umfasst einen Griff 104, um das Speisenzubereitungsgefäß 102 aus der Halterung 103 leicht entfernen zu können. Die Küchenmaschine 101 umfasst eine Arretierungseinrichtung mit schwenkbar gelagerten Armen 105. In der in der Figur 1 gezeigten arretierten Stellung umschließen die Arme 105 einen Deckel 106. Dadurch ist der Deckel 106 dann fest mit dem Speisenzubereitungsgefäß 102 verbunden. Der Deckel 106 umfasst eine Öffnung, in welches ein transparentes Messgefäß 7 eingesetzt ist. Durch das Messgefäß 7 ist die Öffnung in dem Deckel 106 verschlossen. Das transparente Messgefäß 7 kann jederzeit von der Öffnung abgehoben werden, sodass dann eine Öffnung bereitstellt ist, durch die hindurch eine Zutat in das Speisenzubereitungsgefäß 102 eingefüllt werden kann. Das transparente Messgefäß 107 kann als Dosierhilfe dienen. In das transparente Messgefäß 107 kann ein Gewürz aus der Gewürzabgabevorrichtung 1 geschüttet werden. Im Anschluss daran kann das Gewürz im transparenten Meßgefäß 107 in das Speisenzubereitungsgefäß 102 geschüttet werden. Hierdurch wird vermieden, dass die Gewürzabgabevorrichtung 1 einer Feuchtigkeit aus dem Speisenzubereitungsgefäß 102 ausgesetzt wird. Wird der Schließmechanismus geöffnet, dann kann der Deckel 106 vom Speisenzubereitungsgefäß 102 entfernt werden. Die Küchenmaschine 101 umfasst für ein Aufstellen ein Fußteil 108.

Eine Benutzeroberfläche 109 wird auf einem Bildschirm 110 dargestellt. Der Bildschirm 110 ist vorzugsweise berührungsempfindlich, um beispielsweise Betriebsparameter durch Berühren des Bildschirms einstellen zu können. Die Küchenmaschine kann zusätzlich beispielsweise einen Drehregler 111 umfassen, der ebenfalls dazu dienen kann, im Zusammenspiel mit der Benutzeroberfläche 109 ein oder mehrere Betriebsparameter einstellen zu können. Bezieht sich die Benutzeroberfläche 109 beispielsweise auf eine Rühreinrichtung der Küchenmaschine 101, so kann mit dem Drehregler 111 beispielsweise eine Drehgeschwindigkeit eingestellt werden. Bezieht sich die Benutzeroberfläche 109 beispielsweise auf ein Erwärmen des Speisenzubereitungsgefäßes 102 der Küchenmaschine 101, so kann der Drehregler 111 beispielsweise dazu dienen, um eine gewünschte Temperatur einzustellen. Anstelle eines Drehreglers 111 kann aber beispielsweise auch ein Schieberegler vorgesehen sein, bei dem also durch eine Schiebbewegung Betriebsparameter wie Temperatur, Rührgeschwindigkeit oder eine Zeitdauer eingestellt werden können. Ein Drehregler 111 ist allerdings zu bevorzugen, da große Bereiche eingestellt werden können, ohne dafür übermäßig viel Platz bereitstellen zu müssen. Der Drehregler 111 kann alternativ oder ergänzend als Druckknopf ausgestaltet sein. Unter Druckknopf ist zu verstehen, dass dieser gedrückt werden kann, um eine Aktion auszulösen, so zum Beispiel einen Start einer Zubereitung von ein oder mehreren Speisen.

Die in der Figur 8 gezeigte Küchenmaschine 101 umfasst zumindest eine Schnittstelle für ein Verbinden der Küchenmaschine 101 mit einem anderen Haushaltsgerät. Die zumindest eine Schnittstelle ist beispielsweise eine drahtlose Schnittstelle, um über übliche Standards wie WLAN oder Bluetooth Daten austauschen zu können.

## Patentansprüche

1. Verfahren für eine Zubereitung einer Speise mit einem Speisenzubereitungsapparat (101) und einer elektrisch betreibbaren Gewürzabgabevorrichtung (1), wobei der Speisenzubereitungsapparat (101) einen Speisenzubereitungsraum (102) aufweist und die Gewürzabgabevorrichtung (1) eine Gewürzkammer (6) für die Lagerung eines Gewürzes und eine Dosiereinrichtung (11, 12) umfasst, durch die ein Gewürz dosiert aus der Gewürzkammer (6) entnommen werden kann, mit den Schritten:
• in dem Speisenzubereitungsraum (102) wird eine Speise gesteuert durch eine Steuereinheit gemäß Rezeptschritten eines Rezepts zubereitet,
• das Rezept umfasst einen Gewürzrezeptschritt, gemäß dem ein Gewürz hinzugefügt werden soll,
• wird der Gewürzrezeptschritt erreicht, so wird gesteuert durch die Steuereinheit ein Signal durch eine Signaleinrichtung (4, 110) ausgelöst;
• im Anschluss an das Signal ergreift ein Benutzer die Gewürzabgabevorrichtung (1) und bringt die Gewürzabgabevorrichtung (1) so zum Speisenzubereitungsraum (102), dass ein Gewürz aus der Gewürzabgabevorrichtung (1) in den Speisenzubereitungsraum (102) abgegeben werden kann, oder so zu einem Messgefäß (107), dass das Gewürz aus der Gewürzabgabevorrichtung (1) in das Messgefäß (107) abgegeben werden kann;
• ist die Gewürzabgabevorrichtung (1) durch den Benutzer zum Speisenzubereitungsraum (102) oder zum Messgefäß (107) gebracht worden, so gibt die Gewürzabgabevorrichtung (1) die Menge an Gewürz dosiert ab, die nach dem Gewürzrezeptschritt hinzugefügt werden soll, wobei die Dosierung durch die Dosiereinrichtung (11, 12) automatisiert erfolgt ist.

2. Verfahren nach dem vorhergehenden Anspruch, **dadurch gekennzeichnet, dass** die Gewürzabgabevorrichtung (1) eine Mehrzahl von Gewürzkammern (6) umfasst und in jeder Gewürzkammer (6) ein Gewürz gelagert ist, wobei ein Gewürz in einer Gewürzkammer (6) sich von einem Gewürz in einer anderen Gewürzkammer (6) unterscheidet.

3. Verfahren nach dem vorhergehenden Anspruch, **dadurch gekennzeichnet, dass** gemäß dem Gewürzrezeptschritt eine Mehrzahl von Gewürzen hinzugefügt werden soll und die Gewürzabgabevorrichtung (1) die Gewürze in Form einer Gewürzmischung dosiert abgibt, die nach dem Gewürzrezeptschritt hinzugefügt werden sollen, wobei die Dosierung eines jeden Gewürzes durch die Dosiereinrichtung (11, 12) automatisiert erfolgt ist.

4. Verfahren nach einem der vorhergehenden Ansprüche, **dadurch gekennzeichnet, dass** die Steuereinheit in den Speisenzubereitungsapparat (101) integriert ist.

5. Verfahren nach dem vorhergehenden Anspruch, **dadurch gekennzeichnet, dass** der Speisenzubereitungsapparat (101) Steuerungsbefehle der Steuereinheit drahtlos an die Gewürzabgabevorrichtung (1) sendet, und die Gewürzabgabevorrichtung (1) dadurch veranlasst wird, ein Gewürz zu dosieren.

6. Verfahren nach einem der vorhergehenden Ansprüche, **dadurch gekennzeichnet, dass** die Gewürzabgabevorrichtung (1) die Signaleinrichtung (4) umfasst.

7. Elektrisch betreibbare, zumindest zum Teil handgeführte Gewürzabgabevorrichtung (1) für die Durchführung eines Verfahrens nach einem der vorhergehenden Ansprüche mit einer Gewürzkammer (6), in der ein Gewürz gelagert werden kann, mit einer Dosiereinrichtung (11, 12), die in der Gewürzkammer (6) gelagertes Gewürz automatisiert dosieren kann, mit einer Abgabeeinrichtung (7, 10), mit der die dosierte Menge an Gewürz in eine Speise abgegeben werden kann.

8. Gewürzabgabevorrichtung (1) nach dem vorgehergehenden Anspruch, **dadurch gekennzeichnet, dass** eine Betätigungseinrichtung (3) vorhanden ist, deren Betätigung zur Folge hat, dass durch die Abgabeeinrichtung eine durch die Dosiereinrichtung (11, 12) dosierte Menge an Gewürz abgegeben werden kann.

9. Gewürzabgabevorrichtung (1) nach einem der vorgehergehenden Ansprüche 7 bis 9, **dadurch gekennzeichnet, dass** eine Detektiereinrichtung vorhanden ist, mit der ermittelt werden kann, dass sich die Gewürzabgabevorrichtung (1) oberhalb eines Speisenzubereitungsraums (102) befindet, und die Gewürzabgabevorrichtung (1) so eingerichtet ist, dass die Abgabeeinrichtung (7, 10) eine durch die Dosiereinrichtung (11, 12) dosierte Menge an Gewürz abgibt, wenn mithilfe der Detektiereinrichtung ermittelt wird, dass sich die Gewürzabgabevorrichtung (1) oberhalb eines Speisenzubereitungsraums (102) befindet.

10. Gewürzabgabevorrichtung (1) nach einem der vorgehergehenden Ansprüche 7 bis 10, **dadurch gekennzeichnet, dass** eine drahtlose Schnittstelle für ein Empfangen und/oder Versenden von Daten vorhanden ist.

11. Gewürzabgabevorrichtung (1) nach dem vorgehergehenden Anspruch, **dadurch gekennzeichnet, dass** eine Signaleinrichtung (4) vorhanden ist, die durch das Empfangen von Daten über die drahtlose Schnittstelle veranlasst werden kann, ein Signal abzugeben.

12. Gewürzabgabevorrichtung (1) nach dem vorgehergehenden Anspruch, **dadurch gekennzeichnet, dass** die Signaleinrichtung eine optische Signaleinrichtung (4) und/oder eine akustische Signaleinrichtung ist.

13. Gewürzabgabevorrichtung (1) nach einem der drei vorgehergehenden Ansprüche, **dadurch gekennzeichnet, dass** die Dosiereinrichtung (11, 12) durch das Empfangen von Daten über die drahtlose Schnittstelle veranlasst werden kann, ein Gewürz aus der Gewürzkammer (6) dosiert zu entnehmen.

14. Gewürzabgabevorrichtung (1) nach einem der vorgehergehenden Ansprüche 7 bis 13, **dadurch gekennzeichnet, dass** eine Mehrzahl von Gewürzkammern (6) zur Lagerung von verschiedenen Gewürzen vorgesehen ist und die Dosiereinrichtung (11, 12) Gewürz aus jeder Gewürzkammer (6) dosieren kann.

15. Gewürzabgabevorrichtung (1) nach dem vorgehergehenden Anspruch, **dadurch gekennzeichnet, dass** die Abgabevorrichtung so eingerichtet ist, dass diese eine Mehrzahl von verschiedenen Gewürzen, die durch die Dosiereinrichtung (11, 12) dosiert wurden, als Gewürzmischung abgeben kann.
